# EUROPEAN PATENT APPLICATION

(11) **EP 3 975 095 A1**
(43) Date of publication of application: **30.03.2022**
(21) Application number: 20831017.7
(22) Date of filing: 24.03.2020
(51) Int. Cl.: G06Q 30/02, G06Q 50/30, G06Q 20/06

(54) **LABEL -BASED ADVERTISING SERVICE SYSTEM**

(30) Priority: 24.06.2019 KR 20190074763; 13.08.2019 KR 20190099134
(71) Applicant: Choi, Young Rak, Gangwon-do 25309 (KR)
(72) Inventor: Choi, Young Rak, Gangwon-do 25309 (KR)
(74) Representative: Spengler, Robert
(86) International application number: PCT/KR2020/004007
(87) International publication number: WO 2020/262801

(57) **Abstract**

Disclosed are a license-based advertising service system and service method that provide not only sharing but also financial transaction, group networking, personal linked service or authentication service.

The license-based advertising service system provides a user who purchased a license with the qualification to load advertisements on an emoticon and share the advertisement, provides advertisement sharing between the user who purchased the personal license and sharers, and provides advertisements to the user who purchased an advertisement license.

## Description

### [Technical field]

The present invention relates to a license-based advertising service system, and more particularly, to a system in which a user terminal purchases a license for each purpose from a service server in order to obtain service entitlement and is provided with a service according to the license usage.

### [Background]

With the development of the Internet and smartphones, mobile instant messenger (MIM) has become a communication channel for daily life. The MIM is a PC-based real-time two-way conversation application applied to mobile terminals. It can effectively communicate users' emotions through chatting, voice, video, photo and video sharing functions and emoticon stickers, which are used in various ways, including personal friendship and corporate work.

Conventional advertisements provide advertisements through advertisement media such as broadcasting, newspapers, magazines, or the Internet, and an advertiser pays the advertisement media a cost according to advertisement exposure.

Advertisements through advertising media are passive, so users cannot watch advertisements without access to advertisement media, and they cannot provide active advertising distribution and sharing services by users, such as selecting advertisements they want, watching advertisements, or sharing advertisements to others.

### [Detailed description of the invention]

### [Technical challenge]

In order to solve the above problem, the present invention is to provide a system in which a user with a license directly distributes advertisements in a conversation service to receive reward and provide a plurality of services.

### [Technical solution]

As an embodiment of the present invention, a service server providing a service to a user terminal includes: a license sales part that sells licenses for each service purpose in order to provide service beneficiary qualifications; a display management part that displays a plurality of advertisements that can be fused with a general emoticon owned by a user on the display window and provides advertisement selection to the user terminal; when a fused emoticon is clicked on a sharer terminal, the advertisement loaded on the fused emoticon is transferred to the sharer terminal, and it is linked with the emoticon transfer part and pay system that generates reward information for sharing and transferring advertisements to share, transfer and watch advertisements; and a payment processing part that processes reward according to the corresponding reward, wherein the emoticon transfer part automatically transfers the advertisement loaded in the fused emoticon to the sharer terminal if the sharer is a personal license holder, and transfers the advertisement to the display window of the display management part if the sharer does not have a personal license and the display management part returns the advertisement to the display window and re-displays the advertisement if there is no sharing or click action for a predetermined time in the user or sharer terminal.

As an embodiment of the present invention, the service server includes a cost calculating part that calculates a cost for advertisement display with reference to the display basic information when receiving the display basic information from the advertisement providing terminal, wherein the display management part includes a display basic information setting a limit value for limiting the number of sharing of advertisements by referring, and generating re-arrangement request information for confirming whether a selected advertisement is re-arranged before the number of sharing reaches the limit value.

In an embodiment according to the present invention, the display management part provides a re-displayed advertisement to another user terminal when another user terminal selects the re-displayed advertisement.

As an embodiment according to the present invention, the license for each use includes: a personal license capable of loading an advertisement on an emoticon owned by the user terminal; an advertisement license capable of posting advertisements on the display window and a personal-linked license used based on the personal license.

As an embodiment of the present invention, an advertisement service part that provides an advertisement fused emoticon service that fuses advertisements with a general emoticon and an advertisement sharing service that shares an advertisement-loaded fused emoticon is linked with a pay system to reward for advertisement sharing including a financial transaction service part that provides a reward service that processes It provides a plurality of services.

As an embodiment according to the present invention, a biometric information is received from the user terminal or a biometric device to be registered, and an authentication information including a user's biometric information and a license information is generated and transmitted to the user terminal or stored in a chip or accessory in an authentication service part used for identity or payment authentication.

As an embodiment of the present invention, when a personal license is purchased through the user terminal, a management part for managing license information including user information and a license unique number is included, and the service part includes a plurality of purchases of the user's license information and personal license. It further comprises a group networking service part providing a group networking service for grouping members related to user information by analyzing the member's license information.

As an embodiment according to the present invention, further comprising a conversation service part that provides a conversation service that can use a fused emoticon to a user terminal, wherein the group networking service part groups members by region, industry, field of interest, or location service, it is linked with the conversation service part so that the grouped members can participate in the conversation service.

### [Effects of the Invention]

The present invention provides the ability to load advertisements on emoticons or files owned by users who have purchased, provides the qualification to share advertisements, and provides advertisement sharing between users who purchased licenses and sharers, thereby lessening resistance to advertisements, and provides a business model that can generate revenue for all users, sharers, service providers, and advertisers.

The present invention can satisfy various needs of users by providing not only advertising sharing but also financial transaction, group networking or authentication service to users who have purchased licenses, and providing fun and various conversation services by mixing games and messengers.

### [Brief description of the drawing]

FIG. 1 is a symbol showing a license of the present invention.
FIG. 2 is a block diagram illustrating a license-based advertisement service system according to the present invention.
FIG. 3 is an embodiment of a user terminal according to the present invention.
FIG. 4 is a diagram illustrating an example of setting an advertisement loading display in consideration of the pixel size of a general emoticon according to the present invention.
FIG. 5 is a diagram illustrating an example of inserting a general emoticon and an advertisement loading display in the display area according to the present invention.
FIG. 6 is an example of using an emoticon in a chat window. FIG. 6(a) is a fused emoticon according to the present invention, and FIG. 6(b) is a screen displayed by selecting a general emoticon.
FIG. 7 is a detailed block diagram of a service server according to the present invention. FIG. 8 is a block diagram illustrating in detail a service part according to the present invention.
FIG. 9 is an example showing a screen of a display window according to the present invention.
FIG. 10 is another embodiment showing a screen of a display window according to the present invention.
FIG. 11 is a flowchart illustrating a method of providing a service to a license purchaser according to an embodiment of the present invention.
FIG. 12 is a flowchart illustrating an advertisement reward service provided by a service server according to the present invention.

### [Mode for the invention]

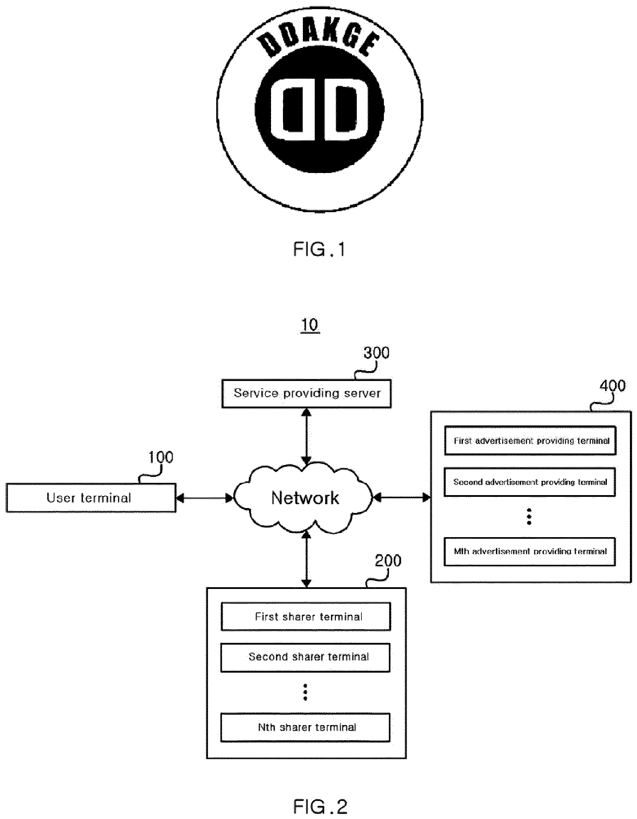

FIG. 1 is a symbol of the present invention called "ddakge", and the ddakge is a kind of license that means qualification or authority to load advertisements on emoticons or files. It may be implemented online or offline in various forms such as marks, certificates, virtual currency, chips, etc.

Licenses can be issued in various ways according to the purpose of the desired service.

There are personal licenses that can load advertisements on emoticons held by user terminals, advertisement licenses that allow advertisers or advertising agencies to display advertisements in display windows, and additional service licenses that can use personal-linked licenses and additional functions.

A personal license refers to the qualification or right to load advertisements by fusion of general emoticons or files owned by a user; an advertisement license refers to the qualification or right to display advertisements; It means the qualification or right to participate in the game or post personal videos.

For example, in the present invention, like a service membership, only a person holding a license is entitled to post or share advertisements and receive rewards and various service benefits.

Since the automatic loading function of the general emoticons owned by the user is provided through the personal license, the user can use the general emoticon owned by the individual as usual without any inconvenience, and the personal license is semi-configurable.

An advertising licenses can be divided into a shared type with a function to share advertisements and a fixed type with a function to load fixed advertisements displayed in an open market. It can be divided into a rechargeable type that has a function to recharge when the reward for sharing is exhausted within a set range, and a destructive type that extinguishes advertisements when the set target number of sharing is reached.

The open market is a type of Internet open market and is a department store-style shopping mall that anyone, including users and businesses, can freely trade, and in this invention, it is called the "ddakge Web."

FIG. 2 is a block diagram illustrating a license-based advertisement service system according to an embodiment of the present invention. The service providing system 10 includes a user terminal 100, a sharer terminal 200, a service server 300, and an advertisement providing terminal 400 and the like.

The user terminal 100, the sharer terminal 200, or the advertiser terminal (hereinafter referred to as 'terminal') may be a smartphone, desktop, laptop or tablet PC, and a user interface for selecting and displaying an emoticon in a messenger service may be provided.

The service server 300 may provide a chatting or messenger service for a conversation between the user and the sharer to the user terminal 100 and the sharer terminal 200.

The user terminal 100 and the sharer terminal 200 may download and install an application for a messenger or conversation service from the service server 300 or the application providing server connected through a wired/wireless communication network.

The messenger or conversation service may include a text message or various SNS services, and may be a mobile instant messenger (MIM).

In the service server 300, an advertisement upload service is installed so that an advertiser or an advertisement agency can upload advertisements to the display window, and an advertisement display service is installed so that a user or sharer can watch or select the displayed advertisement. An advertiser or an advertising agency may upload an advertisement through the advertisement providing terminal 400.

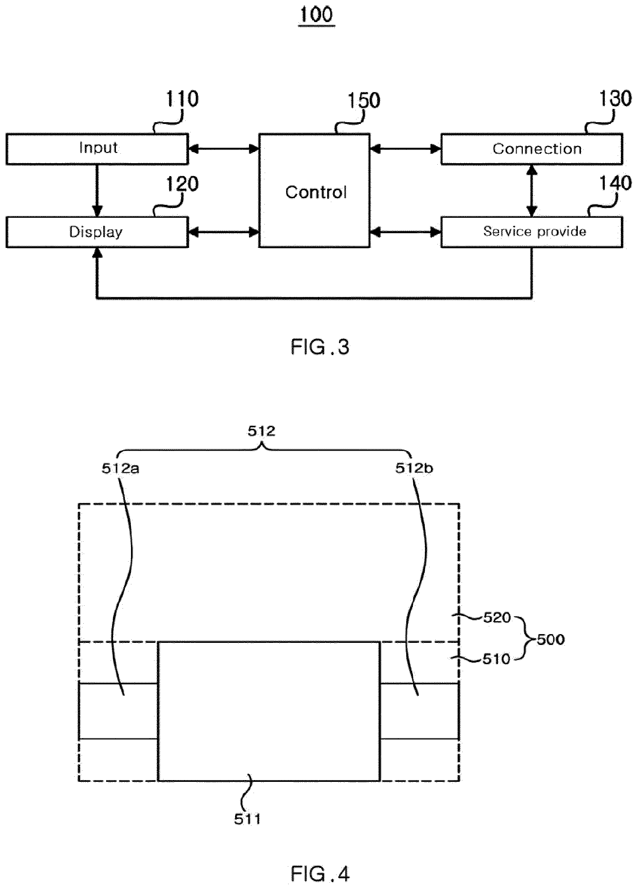

FIG. 3 illustrates an embodiment of a user terminal including an input part 110, a display part 120, a connection part 130, and a service providing part 140.

The input part 110 may provide a keyboard, button, touch, or click input method, and may provide various input means. The display part 120 may display input items input through the input part 110, and may display a result of processing the input items. The connection part 130 provides access to the service server 300 by establishing an Internet communication network.

The service providing part 140 is driven through a license management program provided by the service server 300. The license management program may be provided as an additional function of a chatting service or a messenger service, or may be provided as an independent application.

The service providing part may include a license purchase part, an advertisement selection part, a conversation service providing part, and an emoticon fusion part. The license purchasing part connects to the service server and purchases a personal license that provides qualifications to load advertisements by fusing a user's general emoticons and an advertisement license that provides the qualification to display advertisements. Personal-linked licenses can be additionally purchased to participate in a game.

The sharer terminal 200 may have a license management program or a conversation service program provided by the service server 300 installed therein. The license management program may include a conversation service program.

The sharer terminal 200 generates a notification indicating that the fused emoticon input from the user terminal 100 has been transmitted through the chat service. The sharer may recognize the notification and watch the fused emoticon through the screen of the sharer terminal 200, or may not check the fused emoticon because the sharer does not recognize the notification or may check after a predetermined time has elapsed.

The sharer terminal 200 may transfer the sharing right of the fused emoticon to another sharer by loading the transferred advertisement on the general emoticon owned by the sharer terminal 200.

The service server 300 displays a plurality of advertisements that can be fused to a general emoticon owned by a user on the display window, and the advertisement selection part selects an advertisement from the display window. A user purchases a license and can load an advertisement by fusion of the user's general emoticon, obtains the qualification to share the advertisement, selects the advertisement to be shared, and uses the user terminal 100 installed with the license management program. A fused emoticon in which advertisements are fused to the general emoticon can be created, and the fused emoticon can be shared. The license management program may include a fused emoticon program for generating a fused emoticon by fusing advertisements with a general emoticon owned by a user.

The terminal provides at least one conversation service and provides an interface for displaying the content input by the user through the input part. The content input by the user may be a general emoticon or a fused emoticon, and may be content in various formats, such as text, number, voice, image, video, or document file.

The terminal can set whether to apply or selectively apply fused emoticons to all chat services, and can set whether to convert all of the user's general emoticons into fused emoticons or selectively convert only some of them. For example, by receiving a user's input, it is possible to set that the fused emoticon is used in a messenger service of a specific company, and it can be set that the fused emoticon is not used in the SNS service.

The service server 300 provides a reward to the shared user when the sharer clicks the fused emoticon. In addition, the service server 300 automatically transfers the advertising sharing right loaded on the fused emoticon to the sharer if the sharer has a personal license, and returns only the advertisement to the display window without reward if the sharer does not have a personal license to be selected and shared by other license buyers.

The generation of the fused emoticon in the user or sharer terminal may set the position where the advertisement is displayed in consideration of the pixel size of the general emoticon.

FIG. 4 shows an example of setting advertisement loading display such as the number of target sharing, reward amount, or advertisement period in consideration of a pixel size of a general emoticon. A first display area 511 and a second display area 512 for displaying an advertisement in consideration of a pixel size of a set pixel size are set in the display area 510, and a fused emoticon is generated by loading the general emoticon and the advertisement loading sign in the display area 510.

A fused emoticon is an emoticon that indicates that an advertisement is loaded in a general emoticon owned by a user terminal as a target number or reward amount, and is converted so that a sharer can watch the advertisement when clicked on a sharer terminal 200. The advertisement loading display does not show the advertisement itself, but rather displays the target sharing number, advertisement watching reward, or advertisement period in an empty space or blank space of the emoticon without damaging the general emoticon to arouse curiosity in the sharer. Fused emoticons provide the ability to load, distribute, and share advertisements in conversation services.

The emoticon fusion part may prepare an advertisement loading sign including at least one of a reward amount according to sharing and transfer of the fused emoticon, target sharing times, and an advertisement period. The reason for signing advertisements is to help sharers decide whether to select the transfer of the fused emoticon. Sharers can decide whether to transfer advertisements by looking at the reward amount or the number of shares as if they were playing a game. Another reason for signing advertisements may be to induce interest and purchase of licenses to sharers who do not have the license.

The fused emoticon should display the color of the advertisement-loaded sign so as not to be translucent or prominent, so as not to undermine the meaning of the general emoticon. The maximum display area 500 of the fused emoticon may include a display area 510 occupied by a general emoticon or an advertisement loaded display and an empty blank area 520. The maximum display area 500 means an area in which an image or emoticon can be displayed on a screen to the maximum, and the blank area 520 is an empty area and is not actually displayed on the screen.

The second display area 512 of the fused emoticon may include a 2-1 display area 512a and a 2-2 display area 512b. The 2-1 display area 512a may indicate the number of times an advertisement is shared. The 2-2 display area 512b may indicate a reward amount according to the number of sharing or transfer or a one-time reward amount.

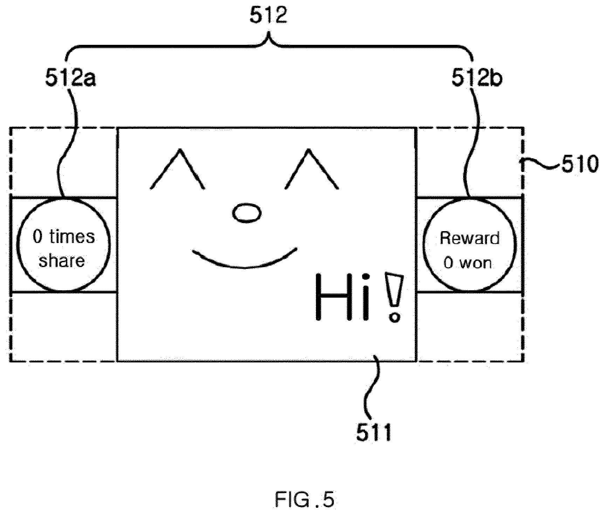

FIG. 5 shows an example of inserting an advertisement loading sign in the display area of a general emoticon, and while expressing one's emotions during a conversation, the advertisement loading sign can be induced to click by arousing curiosity in the sharer.

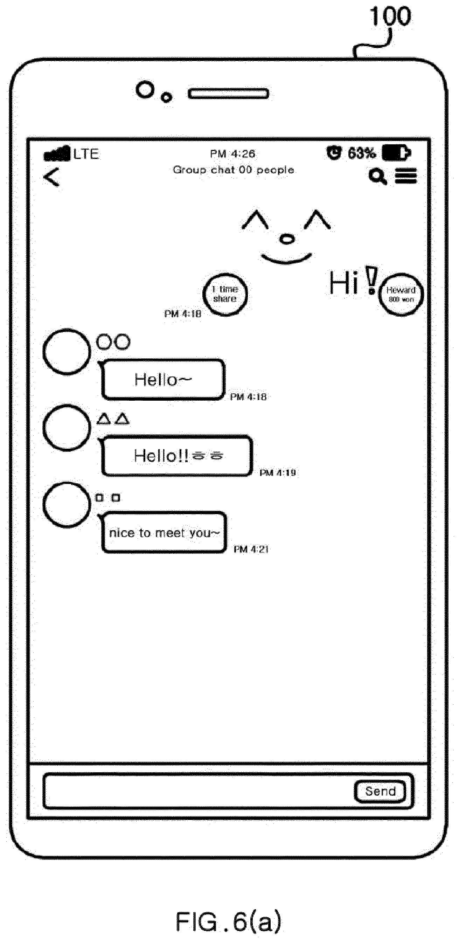

FIG. 6(a) is an example of displaying the fused emoticon on a screen of a terminal, and shows an example of using the fused emoticon during chatting. A sharer may click and select the fused emoticon through the sharer terminal 200, when the sharer clicks the fused emoticon, an advertisement is directly exposed or linked to a related site.

The service server 300 provides a reward to the sharer when the sharer clicks the fused emoticon. In addition, the service server 300 automatically transfers the advertising sharing right loaded on the fused emoticon to the sharer if the sharer is a personal license holder, and returns only the advertisement to the display window without reward if the sharer does not have the personal license, so that another license holder can select it.

The target sharing number may be counted when the fused emoticon is used in the user terminal 100 or may be counted when the fused emoticon is clicked in the sharer terminal 200. The amount of reward is the amount generated by sharing and transferring. For example, as shown in FIG. 6(a), when a sharer clicks a fused emoticon for the first time using the fused emoticon in the user terminal 100, it is recognized as the first sharing and the number of sharing becomes one, and the reward amount is 800 won displayed according to the number of sharing times becomes a circle. When the sharer terminal 200 clicks on the fused emoticon, the advertisement loaded on the fused emoticon is transferred, and the user receives a reward for sharing. Since the service server 300 transfers the advertisement loaded with the fused emoticon to the sharer, the reward amount may be increased by generating reward according to the advertisement transfer. The sharer terminal 200 can share the fused emoticon with other people by loading the transferred advertisement into the general emoticon which the sharer owns, and when shared, the number of sharing is accumulated and counted. If there are many participating sharers in the conversation service, the sharing probability or advertisement promotion efficiency can be improved.

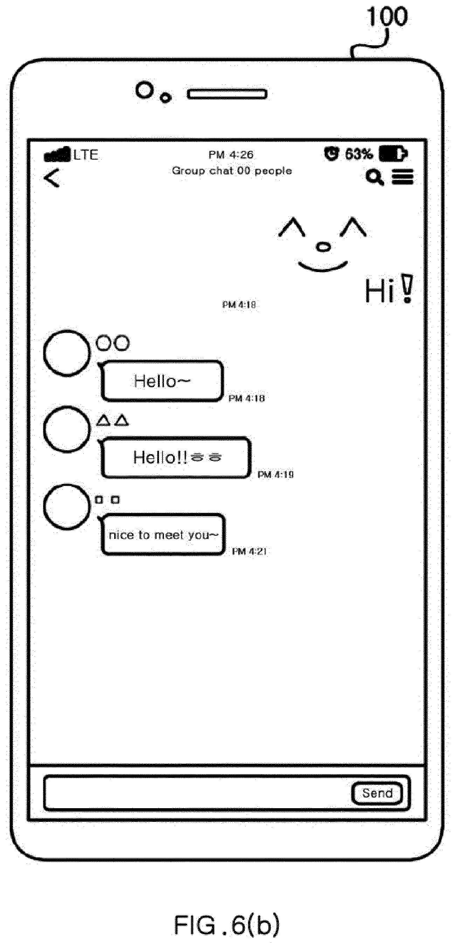

FIG. 6(b) is an example of displaying a general emoticon on a screen, and the sharer terminal 200 may provide a setting for determining whether to display an advertisement loaded display on the screen if the sharer's personal license is not registered. For example, if the sharer terminal 200 does not have a personal license, as shown in FIG. 6(a), a fused emoticon loaded with advertisements may be set to be exposed, and optionally, advertisements are loaded on the screen as shown in FIG. 6(b). They can set the display not to be exposed.

The present invention can provide advertisement sharing between users and sharers who have personal licenses, can provide existing conversation services to sharers who do not have personal licenses, and can induce sharers who do not have personal licenses to purchase personal licenses. and it is possible to provide an active and autonomous advertisement sharing and distribution service by a user or a sharer.

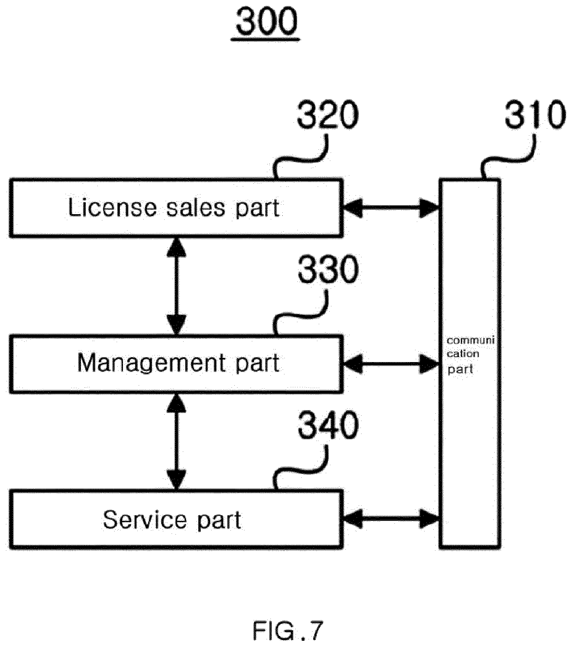

FIG. 7 is a block diagram illustrating the service server 300 in detail. The service server 300 includes a communication part 310, a license sales part 320, a management part 330, and a service part 340. The communication part 310 provides communication with the user terminal 100, the sharer terminal 200, or the advertisement providing terminal 400.

The license sales part 320 sells licenses by type, such as personal licenses, advertisement licenses, personal-linked licenses, and additional service licenses. The license sales part 320 may sell one semi-permanent personal license per person, but may sell a limited number of personal licenses. The reason for limiting the number of personal licenses is to protect personal licenses that can be used for identification, maintain and increase the value of the licenses, and become popular.

A personal license represents membership status as a symbol online and can be implemented as an ID card, virtual currency, or a physical chip, and can provide the function of a virtual currency, ID card or bankbook to be used in various countries. The personal license may be linked with a pay system or a payment system, and rewards accumulated in connection with the pay account of the pay system may be applied to the pay system and used. The reward can be used as a currency that can be universally paid in virtual currency.

The pay system can be used for payment online, and registration of an account, card, or personal license of the present invention is required for payment. The accumulated reward amount of the personal license can be called 'ddakge money' as a virtual currency, and can be converted into points of the pay system. The license sales part 320 may sell personal licenses only to users or sharers who have opened a pay account.

The ddakge money, the accumulated reward for personal licenses, can be used like cash and can be used internationally as a virtual currency grafted with block-chain technology in solidarity with the pay system and global companies. Personal licenses can be purchased through the pay system.

When a personal license is purchased through the user terminal 100, the management part 330 manages license information including user information and a unique license number. The user information may include a name, gender, date of birth, resident number, phone number, address, or e-mail. The license unique number may be an issuance number indicating a number that issued a personal license, or an additional number indicating a virtual number added. For example, the unique license number can be used as a function of an account number in a passbook, as a function to find out which user's personal license is, and can be used to authenticate a user's identity. The management part 330 may manage not only user information, but also sharer information or advertiser information.

The management part 330 includes an emoticon transfer part that transfers an advertisement loaded on a fused emoticon to a sharer terminal when the fused emoticon is clicked on the sharer terminal, and generates reward information according to the sharing and transfer of the advertisement;

The license sales part 320 may sell an advertisement license by dividing it into at least one of an advertisement subject and a display type. The subject of advertising can be divided into individuals, corporations, non-profit organizations, and government organizations. The display form of the advertisement may be a text, an image, a video, a hyperlink, a game, a video sharing platform, or a combination thereof. An advertisement may be produced by the subject directly or customized through an advertising agency.

The advertisement license may be provided in at least one of a shared type, a rechargeable type, an extinguishing type, and a fixed type. In more detail, advertisement licenses can provide a function to share advertisements, a function to charge when reward for advertisement sharing is exhausted within a set range, a function to extinguish advertisements when the set target number of shares is reached, or to load fixed advertisements on an open market.

The YouTube-type advertisement license is a license that provides the user with the qualification to load their own advertisement in YouTube format. In addition, YouTube-type advertisement licenses can be loaded with YouTube-type advertisements, and advertisements made by the user or custom-made can be loaded. For example, the user may access the service server 300 through the user terminal 100, purchase a YouTube-type advertisement license, and load his or her own advertisement on the YouTube-type advertisement license.

Personal videos displayed through YouTube-type advertising licenses can be rewarded when they reach a predetermined target number of views, thereby generating revenue. In order to watch videos, A user has to watch the advertisement shown on YouTube, but the present invention provides for watching the video content with the amount of reward accumulated immediately after not watching the advertisement, or if there is no accumulated license money, the advertisement that one wants to see among the advertisements posted on the display window. They can watch video contents by accumulating license money by watching. In other words, it has the advantage of not being able to watch advertisements that one does not want to watch and being able to watch video content immediately.

The fixed advertising license may display advertisements for a single product displayed in an open marketplace, and may provide the qualification to display advertisements for the entire product of the shopping mall or the homepage.

Fixed advertisement licenses are used for product sales by collecting items that are difficult to share with each other in the chat window, and are used to purchase products by calling advertisements because sharing reward cannot be given.

If a user wants to use a single product such as a video or document form displayed as a fixed advertisement license, the user can use the product by paying a reverse reward, that is, a reward once a day, to the provider of the single product.

A license for advertising corporate may be a license for a company's product or image, a license that is charged and used when the shared reward is exhausted within a set range, or a license that incurs a fee in the process of recharging. Link type, video type, election type, and government agency advertisement license may be extinct, and may be a license that can be extinguished when a set target number of sharing is reached.

The service part 340 provides a plurality of services to the user terminal with reference to license information. The plurality of services may include a chat service by a messenger, advertisement sharing reward, financial transaction provision, group networking, open market, authentication and license calculation service.

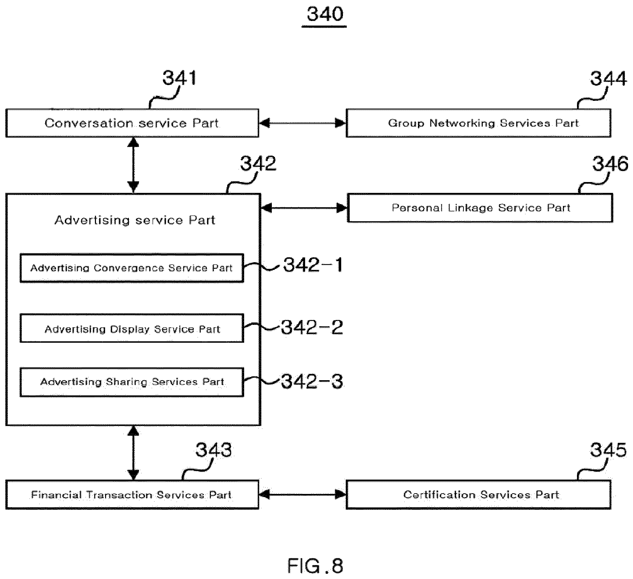

FIG. 8 is a block diagram illustrating in detail the service part 340 of the service server, wherein the service part 340 includes a conversation service part 341, an advertisement service part 342, a financial transaction service part 343, and group networking service part 344. It may include an authentication service part 345 and a game service part 346.

The conversation service part 341 may provide a conversation service program for a conversation between the user and the sharer to the user terminal 100. The conversation service part 341 may develop and hold a conversation service program by itself, and may provide it to the user terminal 100 by interworking with the conversation service server.

The advertisement service part 342 may provide an advertisement fused emoticon service that fuses advertisements with a general emoticon owned by a user and an advertisement sharing reward service that shares the fused emoticon loaded with advertisements.

The financial transaction service part 343 provides a reward service for processing reward according to advertisement sharing by interworking with the pay system. The financial transaction service part 343 may process various financial transactions such as license purchase, payment, cash withdrawal, and virtual currency remittance in conjunction with the pay system.

The advertisement service part 342 may include an advertisement fusion service part 342-1, an advertisement display service part 342-2, and an advertisement sharing service part 332-3.

The advertisement fusion service part 342-1 provides the user terminal 100 with a fused emoticon program for generating a fused emoticon by fusing advertisements with a general emoticon owned by a user. The user terminal 100 may generate a fused emoticon by installing a fused emoticon program.

The advertisement display service part 342-2 displays a plurality of advertisements that can be fused with a general emoticon owned by a user on the display window, and provides advertisement selection to the user terminal 100.

The advertisement display service part 342-2 displays advertisements that are not infected with viruses by performing virus inspection on advertisements, images, games, documents, etc. displayed on the display window.

The advertisement display service part 342-2 may provide an advertisement uploading function and a payment function according to the advertisement uploading to the advertisement providing terminal 400. The advertisement providing terminal 400 may access the web of the service server 300, upload advertisements to the display window, and pay for advertisement display through the control of the financial transaction service part 343.

An advertiser or an advertising agency may set a target number of times to share an advertisement, a total reward amount, and a posting expiration date through the advertisement providing terminal 400. The service server 300 autonomously determines the reward amount in the advertisement providing terminal 400 in order to maximize the advertisement effect.

When the advertisement display service part 342-2 receives the display basic information from the advertisement providing terminal 400, the advertisement display service part 342-2 may calculate the cost for the advertisement display with reference to a display basic information. The display basic information may include information about at least one of a reward amount according to advertisement sharing and transfer, the number of times of target sharing, and a posting expiration date.

Reward is the price for watching advertisements by browsing the advertisement displayed in the window, the price for sharing the advertisement to the chat service, the price for watching the advertisement by browsing the advertisement shared on the chat service, the price for receiving the advertisement, and the price for receiving the transferred advertisement in another conversation. It may include information according to at least one of the price shared for the service.

The advertisement display service part 342-2 requests payment request information to pay a calculated advertisement display fee to the advertisement providing terminal 400, and when the payment of the advertisement display fee is completed, the advertisement is displayed in the display window. The advertisement providing terminal 400 may pay an advertisement display fee in terms of prepayment or charging. The financial transaction service part 343 may receive advertisement display fees by interworking with the pay system.

The service server 300 provides a portion of the advertisement display fee to the user terminal 100 and the sharer terminal 200, and the remaining amount may be used as a profit for service operation cost or expansion investment cost. For example, a portion of the advertisement display fee can be used as reward for sharing, watching, or transferring advertisements, and the remaining income can be used for service operating expenses such as database construction or maintenance and dividends.

The service server 300 may provide the user terminal 100 with a one-time reward amount set by the advertiser in exchange for browsing the advertisement displayed on the display window or the advertisement loaded on the fused emoticon in the user terminal 100. The service server 300 may limit the number of rewards or the amount of reward in order to prevent misuse due to excessive browsing of advertisements.

When the fused emoticon is clicked in the sharer terminal 200, the advertisement sharing service part 342-3 transfers the advertisement loaded with the fused emoticon to the sharer terminal 200, and generates reward information according to sharing and transfer of the advertisement.

The financial transaction service part 343 processes reward according to sharing and transfer with reference to reward information. The financial transaction service part 343 may provide a reward to the user terminal 100 or the sharer terminal 200 with reference to the reward information. The financial transaction service part 343 may deposit the reward amount in real time with a pay account, such as ddakge money or virtual currency, and may pay the purchase price of the product or withdraw it in cash as the reward amount.

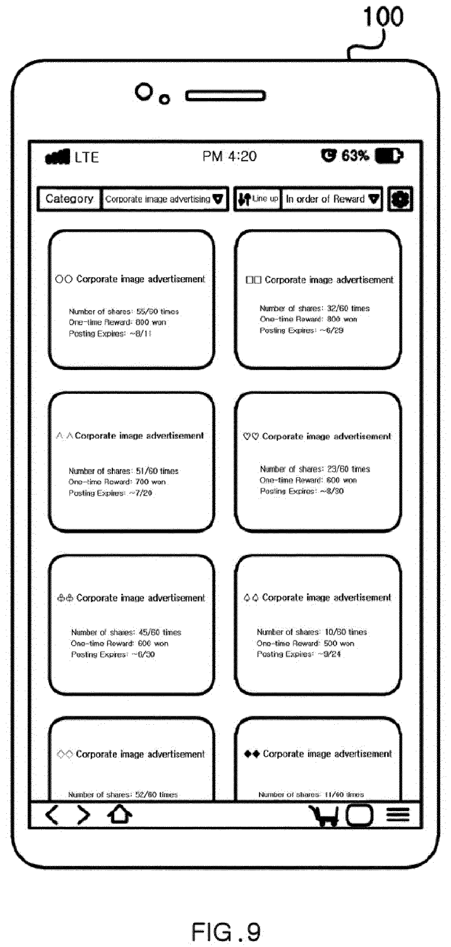

FIG. 9 is an example of a screen of a display window. The advertisement display service part 342-2 has a function of classifying and displaying advertisements by category, a function of arranging advertisements using various sorting options, and a function of setting an arrangement form of the display window. At least one of them may be provided to the user terminal 100.

The advertisement display service part 342-2 may hold various types of advertisements, display advertisements by category in order to display advertisements in an easy-to-watch form for a user, and may have a function of arranging advertisement display order. FIG. 9 is an example of a display window in which a category is classified into corporate image advertisements, and advertisements in the order of the highest one-time reward are arranged. The one-time reward amount is the reward amount set by an advertiser in exchange for watching the advertisement. The display management part 322 may separately classify and display advertisements with a large share of reward.

The advertisement display service part 342-2 may limit the number or amount of reward per day according to the advertisement browsing in order to prevent a user from browsing the advertisement excessively and repeatedly.

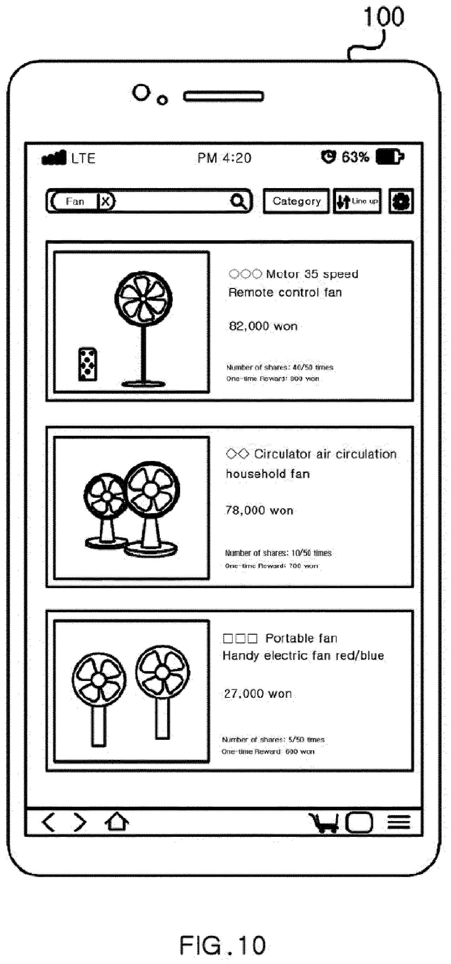

FIG. 10 is another example illustrating a screen of a display window. FIG. 10 is an example of a display window showing the results of classifying a category into corporate product advertisements and searching for products with a fan.

The advertisement display service part 342-2 removes the selected advertisement when one advertisement is selected from among advertisements displayed on the display window through the user terminal 100, and clicks a share on the advertisement in the sharer terminal 200 for a predetermined time. If not, the selected advertisement can be returned to the display window and re-displayed.

The advertisement display service part 342-2 sets a limit value for limiting the number of sharing with reference to the display basic information, and generates re-display request information for confirming whether the advertisement is re-displayed before the number of sharing reaches the limit value. When the number of times of sharing advertisements displayed on the display window reaches the limit value or the reward for advertisement re-display is not paid, the advertisement display service part 342 - 2 may remove the advertisement displayed on the display window.

The advertisement display service part 342-2 may provide the re-displayed advertisement to other user terminals when another user terminal selects the re-displayed advertisement, thereby activating the advertisement distribution.

A messenger service company, a telecommunication company, and a local government can participate as a system construction cost of the service server 300 and a plan to revitalize the local economy, and it is possible to attract investment from global companies or establish an investment corporation for global advancement.

The financial transaction service part 343 provides a financial transaction service that allows reward for sharing, transferring, and browsing advertisements to be used for financial transactions. The financial transaction service part 343 receives a user's license information from the management part 330, receives reward information from the advertisement sharing service part 343-3, and refers to the user information and license unique number included in the license information.

The financial transaction service part 343 may accumulate reward into ddakge money or ddakge money's account, a pay account of a pay system, or a user's bank account, may provide a linked account, and may convert it into cash, and the user can pay for the purchase of certain items.

The group networking service part 344 groups the members related to a specific element among the members who purchased the license. By providing an information exchange environment between grouped members, it is possible to provide development of the community, improvement of job competency for each industry, or knowledge acquisition in areas of interest.

The group networking service part 344 groups members based on at least one of region, industry type, and field of interest, and provides a regional group conversation service by interworking with the conversation service part 341 so that the grouped members can participate in the conversation service.

For example, the group networking service part 344 may group local members by small community, and a user holding a personal license may automatically enter a chat group of small community. If a small group of real names is created within the local chat group, a head of the small group may be recommended as the upper group so that the upper group may be formed.

The local group chat service allows small business owners to purchase advertisement license by entering the number of shares proportional to the local population at a low cost by creating local group chat services in small community.

The local group chat service displays the relevant regional advertisement on the main screen, allows the personal license holder to automatically enter the regional chat group, and allows various chat groups to be opened from small local groups with real names to national districts to display various advertisements.

A local group head can be elected through the upper group formation stage, and the CEO or cyber president can be elected as the last stage of the upper group formation stage, which helps to revitalize local gatherings.

For example, when a chat room titled 'The 56th Bongpyeong Elementary School Meeting' is created, a chairman of the meeting is elected by voting, and the cyber crown provided by the service provider is placed on it, and the upper group, the total alumni chat room, is created. In addition, it recommends automatic entry to the alumni association chat room, so that the general alumni president is born in the alumni association meeting. In the same way, it is possible to continuously recommend upper-level group chat rooms and, as a result, create a cyber-president.

When the supreme authority is born, a gift is given, and when the term of office of the supreme authority ends, the election begins again with a small local group. The term of office of the group head extends from the election to the end of the term of the cyber president.

In a call room license, when you enter text in the messenger, the product in the fixed license is called up or linked with a link. For example, if you enter 'Hyundai Motors' in the messenger chat window, you will be directed to Hyundai Motors products in an open market or to the Hyundai Motors website.

The authentication service part 345 may receive and register biometric information from the user terminal 100 or a biometric device, and generate authentication information including a user's biometric information and license information. The biometric device may be installed in a government institution that can issue, modify, or print a user identity certificate. The authentication service part 345 may be linked with a biometric device or a government agency to register the user's biometric information, and may load biometric information to prove the user's identity on the license.

The authentication information may be transmitted to the user terminal 100 or stored in a chip or accessory, and may be used as identity or payment authentication. Users can prove their identity with a chip in which authentication information is stored, even if they do not have a resident registration card, driver's license or passport to prove their identity. For example, the user may connect a chip in which authentication information is stored to the chip recognition module of the biometric scanner for access management, and allow the biometric module of the biometric scanner to recognize his or her fingerprint or iris. The biometric search part can manage the user's access by comparing the biometric information stored in the chip with the biometric information recognized by the biometric module.

The personal-linked service part 346 may satisfy various demands of users by providing various services to users who have purchased a personal-linked license.

The personal-linked service part 346 provides a game service and a personal video service, but is not limited thereto.

The personal-linked license, which is a linked type of personal license, includes a game-type license and a personal video license. The game-type license includes a shared game type, a general game type, and a speculative game type license.

Personal-linked licenses can be purchased by selecting through the license purchasing part 320.

A sharing game is a ranking competition game in which advertisements are shared in a chat window and rewards are rewarded in return for sharing, like the sharing king game, and a general game is a game in which the user connects to a game or a link on the license web, and the user enjoys the connected game.

Licenses for shared games have a limited period of use per license. For example, each license can be used for 10 days. When purchasing licenses for shared games, there is a benefit of selecting and watching separate advertisement licenses for which the license gift program operates, and a menu for selling licenses for advertisement will be provided.

The license gift program is to provide a gift as a reward when the target number of sharing is achieved when advertisements are shared, and since licenses with separately displayed gifts can be loaded first, a large amount of sharing rewards can be obtained.

If users purchase a license for a shared game, users can sell advertising licenses to their acquaintances through the email provided by the service company, and their purchase points will also be added points. The daily, monthly, and yearly business performance is saved, and users automatically participate in the shared king who is elected every month and every year, and users acquire the qualifications to be elected as CEO with many benefits.

Licenses for speculative games are used as a strategy to nurture speculative games, and licenses for speculative games may be limited according to age.

For speculative games, the number of admissions per day can be limited within the limit of the reserves held, the amount of use per day can be limited, and the amount of use and number of admissions on a weekly and monthly basis can be limited.

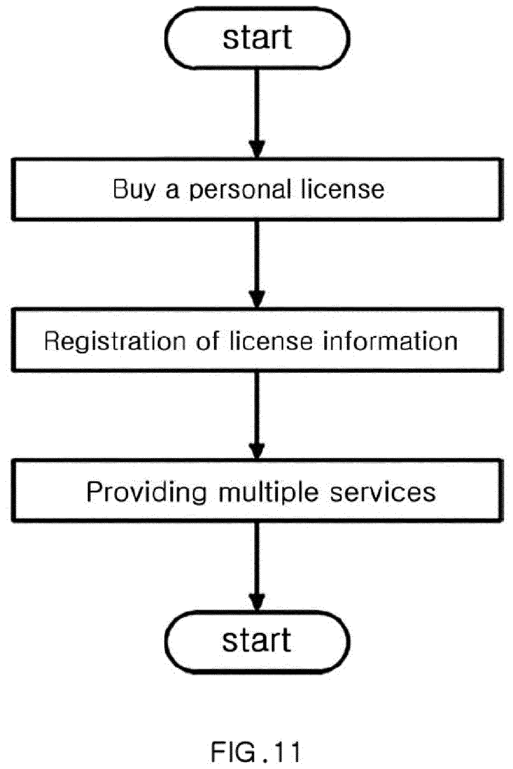

FIG. 11 is a flowchart illustrating a method of providing a service for license purchasers according to an embodiment of the present invention, wherein a user terminal accesses the service server 300 and obtains the qualification to load advertisements by integrating advertisements with general emoticons owned by the user. The management part 330 registers a license information including user information of the user terminal 100 and the license unique number, and the service part 340 refers to the license information to provide a chat service by messenger, advertisement sharing reward, and financial transaction. a plurality of services such as group networking, open market, authentication and table calculation services are provided to the user terminal 100.

FIG. 12 is a flowchart of an advertisement sharing reward service according to the present invention, wherein a license for each purpose such as personal or advertisement is purchased and the advertisement sharing or advertisement is posted on the display window. A purchaser of a personal license creates a fused emoticon by selecting an advertisement displayed in the advertisement window among the owned general emoticons.

Users use fused emoticons during chat such as messengers. If the sharer participating in the chat does not click the fused emoticon for a predetermined time, the advertisement is returned to the advertisement display window without being transferred and waiting for another user's selection.

If the fused emoticon used during chat is clicked on the sharer terminal, the advertisement loaded with the fused emoticon is transferred to the sharer terminal, and reward information according to the sharing and transfer of the advertisement is generated. The financial transaction service part processes reward for sharing, transferring, and watching advertisements with reference to advertisement reward information.

In the present invention, the user terminal 100 uses a fused emoticon loaded with an advertisement in a general emoticon owned by a user, and the advertisement is not exposed by exposing the loaded advertisement only when the fused emoticon is clicked on the sharer terminal 200. Advertising does not interfere with chat.

According to the present invention, a fused emoticon including an advertisement loading sign indicating the number of times of target sharing, the number of times shared, the advertisement period or the amount of reward is displayed on the sharer terminal 200 so that advertisements can be shared as if the sharer was playing a game, and it can induce the interest of the sharer.

### [Industrial availability]

The present invention is a system in which a user with license qualifications is rewarded by directly distributing advertisements in a chat service and provided with a plurality of services.

The present invention provides financial transactions, group networking, or authentication services as well as rewards for sharing advertisements to users who have purchased licenses, and provides fun and diverse conversation services by mixing games and messengers to meet the various needs of users.

## Claims

1. A license-based advertising service system including a service server that provides a plurality of service to a user terminal,
the service server comprising:
a license sales part that sells licenses for each service use to provide eligibility for service beneficiaries;
a display management part that displays a plurality of advertisements that can be fused with a general emoticon owned by a user on a display window and provides advertisement selection to a user terminal;
an emoticon transfer part that transfers an advertisement loaded on a fused emoticon to a sharer terminal when the fused emoticon is clicked on the sharer terminal, and generates reward information according to the sharing and transfer of the advertisement; and
a payment processing part that works in conjunction with a pay system to process reward for sharing, transferring, and watching advertisements;
wherein the emoticon transfer part automatically transfers the advertisement loaded in the fused emoticon to the sharer terminal if the sharer terminal has a personal license, and returns the advertisement to the display window of the display management part if the sharer terminal does not have a personal license, and re-displays the advertisement to the display window; and
wherein the display management part returns the advertisement to the display window and re-displays when there is no sharing or clicking action for a predetermined time in the user terminal or sharer terminal.

2. The license-based advertising service system of claim 1, comprising:
a cost calculation part for calculating a cost of advertising display with reference to a display basic information when the display basic information is received from an advertisement providing terminal; and
the display management part that sets a limit value for limiting the number of sharing of advertisements with reference to the display basic information, and generates re-display request information for confirming whether a selected advertisement is re-displayed before the number of sharing reaches the limit value.

3. The license-based advertising service system of claim 1,
wherein the display management part provides a re-displayed advertisement to another user terminal when another user terminal selects the re-displayed advertisement.

4. The license-based advertising service system of claim 1,
wherein the license comprises:
a personal license that can load advertisements on emoticons owned by the user terminal;
an advertisement licenses for displaying advertisements on display windows; and
a personal-linked license used based on the personal license.

5. The license-based advertising service system of claim 1, comprising:
an advertisement service part that provides an advertisement fused emoticon service that fuses advertisements with a general emoticon and an advertisement sharing service that shares the fused emoticon loaded with advertisements; and
a financial transaction service part that provides a reward service that processes reward according to advertisement sharing in conjunction with a pay system and provides a financial transaction service that allows the reward to be used for financial transactions;
wherein a plurality of services is provided to a user terminal who purchased a personal license, an advertisement license, or a personal-linked license.

6. The license-based advertising service system of claim 1, comprising an authentication service part,
wherein a biometric information is received and registered from the user terminal or a biometric device, and authentication information including the user's biometric information and license information is generated, transmitted to the user terminal or stored in a chip or accessory, and is used for identification or payment authentication in the authentication service part.

7. The license-based advertising service system of claim 1, comprising:
a management part that manages a license information including a user information and a license unique number when a personal license is purchased through the user terminal; and
a group networking service part that provides a group networking service for grouping members related to the user information by analyzing license information of the user and license information of a plurality of members who have purchased personal licenses.

8. The license-based advertising service system of claim 1, comprising:
a conversation service part that provides a conversation service that can use the fused emoticon to the user terminal; and
a group networking service part that groups members based on region, industry, field of interest, or location service, and is linked with the conversation service part so that the grouped members can participate in the conversation service.
